Europäisches Patentamt

European Patent Office

Office européen des brevets

(11) Veröffentlichungsnummer: **0 502 257 A1**

## EUROPÄISCHE PATENTANMELDUNG

(21) Anmeldenummer: **91121902.0**

(22) Anmeldetag: **20.12.91**

(51) Int. Cl.5: **G01J 3/433**, G01J 3/06

Ein Antrag gemäss Regel 88 EPÜ auf Berichtigung und Hinzufügung Seite 6, Zeile 25, Seite 8, Zeile 24 und 28, Seite 8 Zeile 28-29 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **04.03.91 CH 644/91**

(43) Veröffentlichungstag der Anmeldung:
**09.09.92 Patentblatt 92/37**

(84) Benannte Vertragsstaaten:
**AT CH DE DK FR GB IT LI NL SE**

(71) Anmelder: **Landis & Gyr Betriebs AG**

**CH-6301 Zug(CH)**

(72) Erfinder: **Tsing, Dschen**
**Rosenstrasse 34**
**CH-8953 Dietikon(CH)**

(54) **Optisches Spektrophotometer.**

(57) Ein Spektrophotometer zum Messen von Absorptions- oder Emissionsbanden im optischen Bereich elektromagnetischer Strahlung (2) umfasst eine Lichtquelle (1), einen von einer Steuereinrichtung (21, 22; 21, 22, 23) angesteuerten, über das Spektrum der Lichtquelle (1) verstellbaren Monochromator (5), einen Photosensor (6) zum Messen der Intensität (I) von den Monochromator (5) durchdringenden monochromatischen Strahlen (14) sowie eine Auswerteeinheit (19) für Messignale des Photosensors (6). Der Monochromator (5) moduliert die Wellenlänge mit einer Wellenlängenamplitude ($\delta$W) und einer Frequenz ($f_1$) der am Photosensor (6) eintreffenden Strahlen (14). Das Auswerten von Signalen des Photosensors (6) erfolgt synchron zur Modulation der Wellenlänge der Strahlen (14). Die Modulation der Wellenlänge ist einstellbar.

Fig. 1

Die Erfindung bezieht sich auf ein optisches Spektrophotometer der im Oberbegriff des Anspruchs 1 genannten Art.

Solche optischen Spektrophotometer eignen sich beispielsweise zum Nachweis von Stoffen in einer Trägersubstanz, insbesondere zum Messen der Konzentration von Schadstoffen in der Luft.

Ein optisches Spektrophotometer der im Oberbegriff des Anspruchs 1 genannten Art ist in der US-PS 4 732 476 beschrieben und weist einen Monochromator mit einem Beugungsgitter auf, das sich mit konstanter Winkelgeschwindigkeit um eine vorbestimmte Achse dreht. Das mit Weisslicht beleuchtete Beugungsgitter erzeugt im Probenraum einen einfarbigen Lichtstrahl, dessen Wellenlänge in Abhängigkeit der Stellung des Beugungsgitters und der Zeit in schneller Folge periodisch das ganze Spektrum überstreicht. Ein photodetektor ist nach dem Probenraum angeordnet und misst die durch die Absorptionswirkung des im Probenraum befindlichen Stoffes veränderte Intensität des Spektrums.

Es ist auch ein Spektrophotometer bekannt (US-PS 4 070 111), bei dem das Beugungsgitter auf der Achse eines Galvanometer-Messwerkes sitzt. Das ausgefilterte Licht, dessen Wellenlänge über das Spektrum der Lichtquelle hin und her streicht, wird zur Analyse in einen Referenzstrahl und einen den Probenraum durchdringenden Messstrahl aufgeteilt.

Ferner ist aus der GB-A 2 181 536 bekannt, den Probenraum für gasförmige Stoffe mit Licht aus einer Weisslichtquelle zu durchstrahlen. Das durch die Stoffe veränderte Spektrum des Lichtes wird in einem als Filter mit schmaler Durchlasskennlinie wirkenden Fabri-Perot Resonator analysiert. Die optische Länge des Fabri-Perot Resonators ist mittels eines elektrischen Signals mit asymmetrischer Sägezahnform periodisch veränderbar. Die Durchlasskennlinie des Fabri-Perot Resonators überstreicht während jeder Periode einen durch das elektrische Signal vorbestimmten Teil des Spektrums. Das gefilterte Licht trifft auf den Photodetektor, dessen Ausgangssignal als Funktion des elektrischen Signals ausgewertet wird.

Der Erfindung liegt die Aufgabe zugrunde, ein kostengünstiges optisches Spektrophotometer zu schaffen, das einfach aufgebaut ist und das eine rauscharme Verstärkung des Messignals ermöglicht.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnungen näher erläutert.

Es zeigt:

Figur 1     ein Spektrophotometer mit einem Beugungsgitter,

Figur 2     ein Spektrum mit einer Absorptionsbande,

Figur 3     eine Lichtquelle mit einer Heizwendel,

Figur 4     das drehbare Beugungsgitter,

Figur 5     das Beugungsgitter mit Spannbändern,

Figur 6     ein Substrat mit dem an den Spannbändern aufgehängten Beugungsgitter und

Figur 7     ein Spektrophotometer mit einem Fabri-Perot Resonator.

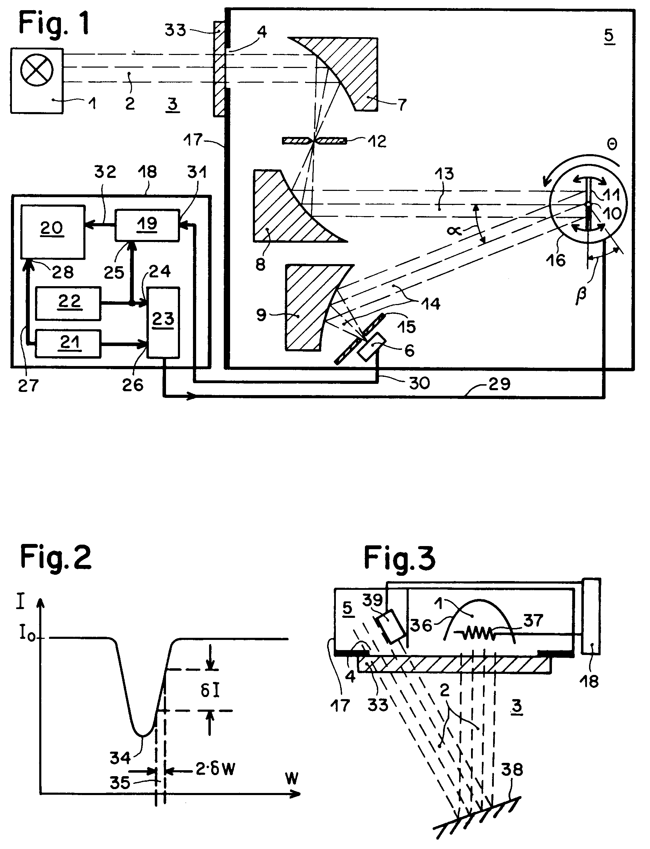

In der Figur 1 bedeutet 1 eine Lichtquelle, die vorzugsweise parallel gerichtete, breitbandige elektromagnetische Strahlung 2 in einem Probenraum 3 erzeugt, der zwischen der Lichtquelle 1 und einem Spektrophotometer angeordet ist. Stoffe, z. B. Gase, im Probenraum 3 verändern die Strahlung 2 spektral. Durch eine Eintrittsöffnung 4 des Spektrophotometers hindurch gelangt die Strahlung 2 in einen Monochromator 5, der als schmalbandiges Filter wirkt und nur für eine vorbestimmte Wellenlänge W durchlässig ist. Ein nach dem Monochromator 5 angeordneter Photosensor 6 erzeugt ein elektrisches Messignal.

Mit Vorteil befindet sich der Probenraum 3 zwischen der Lichtquelle 1 und der Eintrittsöffnung 4, so dass seine Grösse nur von der Intensität der Strahlung 2 begrenzt ist. Eine Anordnung des Probenraums 3 im oder nach dem Monochromator 5 ist auch möglich.

Beispielsweise umfasst der Monochromator 5 ein aus einem Eintrittsspiegel 7, einem Mittelspiegel 8 und einem Fokussierspiegel 9 bestehendes fokussierendes Spiegelsystem und enthält ein um eine Drehachse 10 drehbares reflektierendes Beugungsgitter 11 als wellenlängenbestimmendes Mittel. In der Zeichnung ist der Strahlengang des Spektrophotometers mit gestrichelten Linien dargestellt. Die durch die Eintrittsöffnung 4 tretende Strahlung 2 wird vom Eintrittsspiegel 7 aufgefangen und in die Oeffnung einer Eintrittsblende 12 fokussiert. Der Mittelspiegel 8 fängt die nach der Eintrittsblende 12 divergierende Strahlung 2 auf und wirft sie als paralleles Bündel 13 auf das Beugungsgitter 11. Die Strahlung 2 wird am Beugungsgitter 11 spektral zerlegt und unter einem wellenlängenabhängigen, vorbestimmten Beugungswinkel $\pm \alpha$ gemessen zum Bündel 13 reflektiert. Der Fokussierspiegel 9 sammelt alle vom Beugungsgitter 11 unter dem Winkel $+ \alpha$ gebeugten Strahlen 14 und wirft sie in seiner Brennebene auf eine vor dem Photosensor 6 angebrachten Ausgangsblende 15. Nur die Strahlen 14 mit der gleichen Wellenlänge W fallen durch eine Oeffnung der Ausgangsblende 15 auf den Photosensor 6.

Die Drehachse 10 ist parallel zu den Gitterlinien des Beugungsgitters 11 ausgerichtet und steht in der Zeichnung der Figur 1 senkrecht zur Zeichenebene. Das Beugungsgitter 11 ist direkt mit der Drehachse 10 verbunden, z. B durch Aufkleben. Das Bündel 13 fällt beispielsweise senkrecht auf eine Ebene ein, die die Drehachse 10 enthält.

Ein Antriebsmittel 16 ist mit der Drehachse 10 verbunden und dreht das Beugungsgitter 11 um die Drehachse 10 um einen Drehwinkel Θ. Die vorbestimmte Wellenlänge W wird nicht mehr um den Beugungswinkel $\pm \alpha$, sondern um einen Winkel Θ $\pm \alpha$ zum Bündel 13 gebeugt, wenn der Winkel Θ vom Bündel 13 aus gemessen ist. Da aber nur die unter dem durch das Spiegelsystem vorbestimmten Winkel $\alpha$ gebeugten Strahlen 14 durch die Ausgangsblende 15 hindurch auf den Photosensor 6 fallen, ändert sich mit der Drehbewegung des Beugungsgitters 11 die Wellenlänge W der im Photosensor 6 registrierten Strahlung 2.

Das Antriebsmittel 16 erzeugt zusätzlich zur Drehbewegung um die Drehachse 10 eine oszillierende, z. B. sinusförmige Wippbewegung des Beugungsgitters 11 mit einer Wippamplitude $\beta$. Dadurch weist die auf den Photosensor 6 auftreffenden Strahlen 14 eine Modulation der Wellenlänge W mit einer Wellenlängenamplitude $\delta$W auf.

Das Beugungsgitter 11 reflektiert mit Vorteil die gebeugte einfallende Strahlung 2 asymmetrisch in eine vorbestimmte Beugungsordnung, um eine maximale Intensität und Dispersion der Strahlen 14 zu erhalten. Vorteilhaft weist das Beugungsgitter 11 selbst fokussierende Eigenschaften auf, um zur Vermeidung von Reflexionsverlusten die Spiegel 8 und 9 oder nur den Fokussierspiegel 9 einzusparen.

Mit Vorteil können einkristalline Siliziumplättchen mit eingeätzten Gitterstrukturen gemäss der EP-A 387 407 als Beugungsgitter 11 verwendet werden. Diese Siliziumplättchen weisen bei einer Fläche von beispielsweise 3 cm$^2$ und 0,2 mm Dikke eine geringe Masse auf und werden von Beschleunigungen der Dreh- und Wippbewegungen nicht merklich verformt.

Das Antriebsmittel 16 ist mit Vorteil ein Galvanometer-Messwerk, dessen eisenlose Spule ein sehr geringes Trägheitsmoment aufweist und dessen Drehachse 10 vorzugsweise in Edelsteinen (Rubin) gelagert ist, um die Lagerreibung zu minimieren. Dieses Antriebsmittel 16 wandelt ein Antriebssignal linear in einen Drehwinkel Θ um und kann auch die Drehbewegung mit den schnellen überlagerten Wippbewegungen auf die Drehachse 10 übertragen. Der auf etwa 90° beschränkte Drehwinkel Θ des Galvanometer-Messwerks ist für den Anwendungszweck im Monochromator 5 ausreichend. Mit diesem Antriebsmittel 16 kann das Beugungsgitter 11 auch auf eine vorbestimmte Wellenlänge W eingestellt werden, die mit der Wellenlängenamplitude $\delta$W moduliert ist.

Das Spektrophotometer umfasst neben dem in einem Gehäuse 17 untergebrachten Monochromator 5 auch einen elektronischen Teil 18, der das Antriebsmittel 16 mit dem Antriebssignal versorgt und das Messignal des Photosensors 6 auswertet. Der Aufbau des Teils 18 hängt weitgehend von der Ausführung des Monochromators 5 ab.

Beispielsweise enthält der Teil 18 eine Auswerteeinheit 19 mit einem Anzeigegerät 20 und eine Steuereinrichtung, die aus einem Antriebsgenerator 21, einem Modulationsgenerator 22 und einem Mischverstärker 23 besteht.

Ein Ausgang des Modulationsgenerators 22 ist sowohl mit einem ersten Eingang 24 des Mischverstärkers 23 als auch mit einem Synchronisiereingang 25 der Auswerteeinheit 19 verbunden. Der Modulationsgenerator 22 erzeugt ein Modulationssignal (z. B. Sinus, Rechteck usw.), dessen Frequenz $f_1$ und dessen Amplitude vorbestimmt einstellbar sind.

Eine Leitung verbindet einen ersten Ausgang des Antriebsgenerators 21 mit einem zweiten Eingang 26 des Mischverstärkers 23. Eine Taktsignalleitung 27 ist zur Uebertragung eines Taktsignals zwischen einem zweiten Ausgang des Antriebsgenerators 21 und einem Takteingang 28 der Anzeigeeinheit 20 angeordnet. Der Antriebsgenerator 21 erzeugt an seinem ersten Ausgang ein Drehsignal zur Steuerung der Drehbewegung des Antriebsmittels 16, beispielsweise eine ansteigende, asymmetrische Sägezahn-Spannung, mit einer Frequenz $f_2$ und mit einer vorbestimmten Amplitude. Die Taktsignalleitung 27 leitet zu Beginn jeder Periode des Drehsignals das Taktsignal zur Synchronisation an die Anzeigeeinheit 20.

Ein Ausgang des Mischverstärkers 23 ist über eine Speiseleitung 29 mit dem Antriebsmittel 16 verbunden. Der Mischverstärker 23 überlagert das am ersten Eingang 24 anstehende Modulationssignal dem am zweiten Eingang 26 ankommenden Drehsignal. Das mit dem Modulationssignal modulierte Drehsignal wird linear vorbestimmt verstärkt und als Antriebssignal dem Antriebsmittel 16 zugeführt.

Beispielsweise weist das überlagerte Modulationssignal für die Wippbewegung eine Frequenz $f_1$ im Bereich von 5 bis 10 Hz auf, während das Drehsignal eine Frequenz $f_2$ zwischen 1 mHz und 10 mHz besitzt. Die Amplituden der beiden Signale sind derart gewählt, dass das Galvanometer-Messwerk unter der Wirkung des Antriebssignals eine Wippbewegung mit der Wippamplitude $\beta$ von 0,2° bis 2° und eine Drehbewegung um Θ im Bereich von 40° bis 60° ausführt. Die einstellbaren Parameter $f_1$, $f_2$, $\beta$ und Θ sind durch die Anwendung des Spektrophotometers vorbestimmt, z. B. kann für eine Untersuchung eines engen Spektralbe-

reichs der Drehwinkel $\Phi < 40°$ und die Frequenz $f_2 > 10$ mHz gewählt werden.

Das Messignal des Photosensors 6 ist über eine Signalleitung 30 zu einem Signaleingang 31 der Auswerteeinheit 19 geführt. Ein Ausgang der Auswerteeinheit 19 ist über eine Anzeigeleitung 32 mit einem Eingang des Anzeigegeräts 20 verbunden.

Das Spektrophotometer eignet sich für das ganze Spektrum der Strahlung 2 von Ultraviolett bis zum langwelligen Infrarot. Beschränkt man sich auf einen vorbestimmten Ausschnitt des Spektrums, z. B. auf einen Wellenlängenbereich von 1 bis 10 $\mu$m, kann das Spektrophotometer klein und kostengünstig gebaut werden. Vorzugsweise ist die Eingangsöffnung 4 mit einem einzigen transparenten Fenster 33 (z. B. aus Si, Ge oder $CaF_2$) gegen den Probenraum 3 abgetrennt.

Die Figur 2 zeigt einen typischen Ausschnitt aus einem Absorptionsspektrum, in dem die Intensität I der Strahlung 2 (Figur 1) als Funktion der Wellenlänge W aufgetragen ist. Die Strahlung 2 der Lichtquelle 1 (Figur 1) weist im gezeigten Abschnitt eine konstante spektrale Intensität $I_o$ auf. Ein von der Strahlung 2 im Probenraum 3 (Figur 1) durchstrahlter Stoff bewirkt durch seine Absorption in wenigstens einem charakteristischen Wellenlängenbereich ein Absinken der Intensität $I_o$, um nach einem von der durchstrahlten Menge des Stoffes abhängigen Minimum 34 wieder auf die ursprüngliche Intensität $I_o$ anzusteigen.

Durch die Drehbewegung des Beugungsgitters 11 (Figur 1) verschiebt sich ein durch die Wellenlängenamplitude $\delta W$ vorbestimmter Analyse-Bereich 35 der Breite $2 \cdot \delta W$ beispielsweise in Richtung wachsender Wellenlänge W über das Spektrum. Die Modulation der Wellenlänge W mit der Amplitude $\delta W$ bewirkt eine Aenderung $\delta I$ der Intensität I(W) im Bereich der Absorption des Stoffes. Die Grösse von $\delta I$ ist proportional zum Betrag der Steilheit der Funktion I(W).

Befindet sich der Analyse-Bereich 35 im Gebiet mit der konstanten Intensität $I_o$, also ausserhalb des Absorptionsbereichs des Stoffes, gibt der Photosensor 6 (Figur 1) ein konstantes Messignal $S_o$ ab, d. h. es verändert sich als Folge der Wellenlängenmodulation durch die Wippbewegung nicht.

Nimmt die Intensität I(W) im Analyse-Bereich 35 ab, setzt sich das Messignal aus einer Gleichstrom-Komponente und einem Wechselstromanteil mit der Frequenz $f_1$ der Wippbewegung zusammen, wobei die Phasenlage der Wippbewegung und diejenige des Messignals um 180° verschoben ist, falls die Wippbewegung in ihrem ersten Quadranten in Richtung der zunehmenden Wellenlänge W schwingt. Steigt im Analyse-Bereich 35 die Intensität I(W), weisen die Wippbewegung und das Messignal die gleiche Phasenlage auf.

Die Auswerteeinheit 19 (Figur 1) verstärkt ausschliesslich den Wechselstromanteil des Messignals, so dass die beim Nachweis von Absorptionsvorgängen grosse Gleichstromkomponente wirksam unterdrückt wird.

Ein Ausgangssignal der Auswerteeinheit 19 wird aus dem synchron zum Modulationssignal verstärkten Wechselstromanteil des Messignals gewonnen, wobei jede Halbwelle des Messignals mit dem Vorzeichen, das durch die Phasendifferenz zwischen dem verstärkten Messignal und dem direkt am Synchronisiereingang 25 in die Auswerteeinheit 19 eingespeisten Modulationssignal bestimmt ist, zum Ausgangssignal zusammengefügt wird. Das Ausgangssignal ist zur Steilheit der Funktion I(W) proportional. Eine für die Auswerteeinheit 19 verwendbare Schaltung ist als "lock-in amplifier" bekannt.

Beispielsweise kann im Anzeigegerät 20 (Figur 1) das integrierte Ausgangssignal der Auswerteeinheit 19 als Anzeigesignal die Intensität I(W) direkt auf einem Bildschirm in der Form der Figur 2 darstellen, wobei die bei den aufeinanderfolgenden Drehbewegungen erhaltenen Anzeigesignale mit den Taktimpulsen synchronisierbar sind.

Das Spektrophotometer weist die Vorteile eines einfachen Aufbaus, eines praktisch beliebig grossen Probenraums 3 sowie dank der Modulation der Wellenlänge W eine mit geringem Aufwand erzielte, rauscharme Verstärkung des Messignals auf und kann sowohl Absorptionen als auch Emissionen von Licht in den durchstrahlten Stoffen nachweisen.

Eine für den Nachweis von Schadstoffen, wie beispielsweise CO, $SO_2$, $NH_3$ usw., ausreichende Auflösung des Spektrophotometers beträgt im Spektralbereich von 0,8 bis 10 $\mu$m zwischen 50 bis 100 Wellen pro cm. Die Wellenlängenamplitude $\delta W = 0,17$ $\mu$m ist für den Nachweis von z. B. CO geeignet. Das Minimum 34 der CO - Absorption liegt im Bereich von 4,2 $\mu$m.

Die Lichtquelle 1 weist nach der Figur 3 im Brennpunkt eines Parabolspiegels 36 eine Heizwendel 37 auf. Sind Wellenlängen W im Bereich > 1 $\mu$m zu erzeugen, kann die Heizwendel 37 direkt der Atmosphäre des Probenraums 3 ausgesetzt sein, damit keine Absorptionsverluste der Strahlung 2 (Figur 1) in einem die Heizwendel 37 umgebenden Glaskolben entstehen. Die Lichtquelle 1 kann zum Schutz der Heizwendel 37 im Gehäuse 17 untergebracht sein, so dass die Strahlung 2 durch das Fenster 33 in den Probenraum 3 gelangt. Wenigstens eine Spiegelfläche 38 reflektiert die Strahlung 2, bevor sie durch das Fenster 33 in die Eintrittsöffnung 4 des Monochromators 5 eindringt. Vorteilhaft wird das Volumen des Probenraums 3 zur Messung besser ausgenützt.

Ein Teil der Strahlung 2 fällt dabei auf einen Detektor 39, der im Gehäuse 17 hinter dem Fenster 33 neben der Eintrittsöffnung 4 angeordnet ist. Der Detektor 39 misst die Intensität der Strahlung 2 und übermittelt das Ergebnis über eine Leitung zum elektronischen Teil 18. Eine hier nicht gezeigte Schaltung im elektronischen Teil 18 regelt den Strom durch die Heizwendel 37 und somit die Intensität der Strahlung 2.

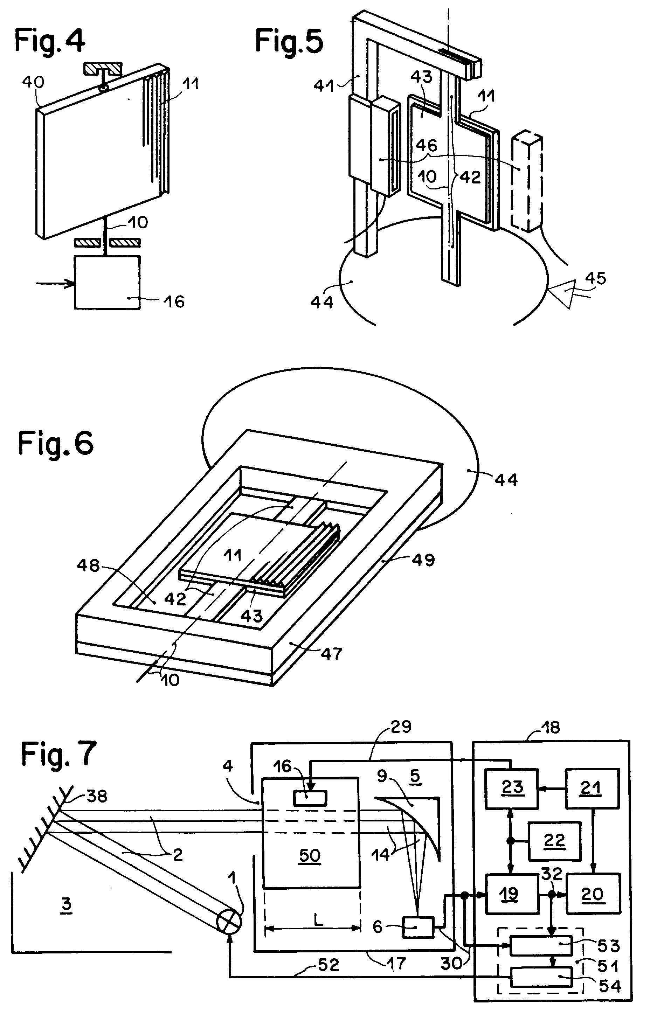

In der Figur 4 ist das Antriebsmittel 16 ein Schrittmotor, der bei einer hohen Schrittzahl pro 360°, z. B. von 1200 Schritten, im Pilgerschritt angetrieben die Drehachse 10 in die kombinierte Dreh- und Wippbewegung versetzt. Mit Vorteil ist die Drehbewegung durch die Antriebsmittel 16 nicht begrenzt, damit der Monochromator 5 (Figur 1) auch in einem anderen Spektralbereich mit einem grossem Auflösungsvermögen arbeitet, wenn auf der Rückseite 40 des Beugungsgitters 11 wenigstens eine weitere Beugungsstruktur angeordnet ist.

Die Figur 5 zeigt eine U-förmige Spanneinrichtung 41, an der das Beugungsgitter 11 vorteilhaft mittels zweier mit beiden Schenkeln der Spanneinrichtung 41 verbundenen Spannbändchen 42 reibungsfrei schwingbar gelagert ist. Die Spannbändchen 42 legen die Drehachse 10 fest. Vorzugsweise verbindet eine Platte 43 die Spannbändchen 42, auf der das Beugungsgitter 11 z. B. durch Kleben befestigt ist. Jede Auslenkung der Platte 43 aus einer Ruhelage bewirkt eine der Auslenkung proportionale Rückstellkraft der Spannbändchen 42. Die Spannbändchen 42 und die Platte 43 bestehen bevorzugt aus einem magnetischen Glas. Die Spanneinrichtung 41 ist auf einem um die Drehachse 10 drehbaren Teller 44 angeordnet. Das Antriebsmittel 16 (Figur 1) treibt den Teller 44 mit einer konstanten Drehgeschwindigkeit an, wobei ein mit dem Teller 44 gekoppelter Drehgeber 45 die Taktsignale an den Taktsignaleingang 28 (Figur 1) liefert.

Auf dem Teller 44 ist wenigstens ein Elektromagnet angeordnet, dessen Spulen 46 über eine galvanische oder induktive Kopplung mit dem Modulationsgenerator 22 (Figur 1) verbunden sind. Die magnetische Platte 43 schwingt im Feld der Spulen 46. Diese Anordnung hat den Vorteil, dass der Mischverstärker 23 (Figur 1) eingespart wird.

Ist die Platte 43 kein Permanentmagnet oder ist dem Modulationssignal keine Gleichstromkomponente überlagerbar, erfolgt die Auslenkung der Platte 43 mit der doppelten Frequenz des an die Spulen 46 angelegten Modulationssignals. Der Modulationsgenerator 22 gibt an die Spulen 46 ein Modulationssignal mit einer Frequenz $f_1/2$, während der Synchronisiereingang 25 (Figur 1) die Frequenz $f_1$ erhält.

Die Spannvorrichtung 41 wird vorteilhaft mit den in der Mikromechanik üblichen Methoden (A. Heuberger, Mikromechanik, Springer-Verlag, Berlin 1989, ISBN 3-540-18721-9) hergestellt. Ein in der Figur 6 gezeigtes Substrat 47 aus einem Halbleiter weist eine Vertiefung 48 auf, in der die Platte 43 mit dem Beugungsgitter 11 an den Spannbändern 42 frei drehbar aufgehängt ist. Das Substrat 47 ist auf dem Teller 44 angeordnet, der die Drehbewegung um die Drehachse 10 ausführt. Elektrostatische oder magnetische Kräfte, die zwischen der Platte 43 und dem Substrat 47 wirken, können die Erzeugung der Wippbewegung erzeugen.

Beispielsweise wird auf der einen Fläche des aus monokristallinem Silizium bestehenden Substrats 47 eine Schicht 49 aus einer magnetischen Legierung abgeschieden, wobei nicht gezeigte Masken, die von den Spannbändern 42 und der Platte 43 nicht bedeckten Gebiete der Vertiefung 48 von der Schicht 49 freihalten. Nach dem Aetzvorgang sind die Spannbänder 42 und die Platte 43 freigeätzt und um einige Grad um die Drehachse 10 frei drehbar. Dies ist für die Wippbewegung ausreichend. Mehrere solche Substrate 47 können gleichzeitig hergestellt und nach ihrer Fertigstellung voneinander getrennt werden.

Das Aetzen erfolgt beispielsweise von der nicht mit der Schicht 48 bedeckten Seite des Substrats 47, damit in einem Arbeitsgang im Bereich der Platte 43 ein Teil des Substrats 47 eine für das Beugungsgitter 11 vorbestimmte Oberflächenstruktur erhält und damit das Beugungsgitter 11 und die Platte 43 ohne zusätzliches Agens optimal miteinander verbunden sind.

Siliziumdioxid eignet sich ebenfalls für die Spannbänder 42 und die Platte 43, wobei die Platte 43 wenigstens eine zusätzliche, hier nicht gezeigte Schicht aus einem elektrisch oder magnetisch leitendem Material aufweist, das entsprechend der zwischen der Platte 43 und dem Substrat 47 gewählten Kraft ausgewählt ist.

In der Figur 7 ist die Lichtquelle 1 ausserhalb des Gehäuses 17 im Probenraum 3 angeordnet. Die Strahlung 2 fällt nach der Reflexion an der Spiegelfläche 38 durch die Eintrittsöffnung 4 in den Monochromator 5, der als Fabri-Perot Resonator 50 ausgebildet ist. Der Fabri-Perot Resonator 50 weist, wie z. B. in der GB 2 181 536A, eine durch das Antriebsmittel 16 elektrisch verstellbare optische Länge L auf und filtert entsprechend seiner optischen Länge L die Wellenlänge W aus der Strahlung 2 aus. Der Fabri-Perot Resonator 50 ist mit Vorteil als Monochromator 5 einsetzbar, da das Antriebsmittel 16, z. B. ein piëzo-elektrisches oder magnetisches Mittel, sehr einfach und trägheitsarm ausführbar ist. Der Fokussierspiegel 9 fängt die Strahlen 14 auf und wirft sie auf den Photosensor 6.

Die optische Länge L folgt dem auf der Antriebsleitung 29 vom Mischverstärker 23 übertragenen, mit der Frequenz $f_1$ modulierten Antriebssignal, so dass die Strahlen 14 der Wellenlänge W mit der Frequenz $f_1$ den Analyse-Bereich 35 (Figur 2) abtasten, während der Analyse-Bereich 35 das Spektrum der Lichtquelle 1 mit der Frequenz $f_2$ durchfährt.

Der elektronische Teil 18 der Vorrichtung ist vorteilhaft zum Regeln des Stromes durch die Heizwendel 37 (Figur 3) und somit der Intensität der Strahlung 2 eingerichtet und weist zusätzlich einen Speisestrommodulator 51 auf, dessen Eingänge mit der Signalleitung 30 und der Anzeigeleitung 32 verbunden sind und dessen Ausgang über eine Speiseleitung 52 die Lichtquelle 1 speist. Der Vorteil dieser Einrichtung besteht im Vermindern der Einflüsse auf das Messresultat, die durch Schmutz auf den von der Strahlung 2 bestrahlten Oberflächen und durch eine Alterung der Heizwendel 37 verursacht werden.

Der Speisestrommodulator 51 umfasst einen Synchronverstärker 53 ("lock-in amplifier") und einen Wechselstromgenerator 54, der einen Wechselstrom für die Heizwendel 37 mit einer vorbestimmten Speisefrequenz $f_3$ erzeugt. Die Speisefrequenz $f_3$ liegt über dem Vierfachen der Wippfrequenz $f_2$ und ist so gewählt, dass sie unterhalb der Grenzfrequenz zur Erzeugung der Strahlung 2 und unterhalb der Grenzfrequenz des Photodetektors 6 liegt. Die Strahlung 2 und das Ausgangssignal des Photodetektors 6 sind mit der Speisefrequenz $f_3$ vorzugsweise 100 % moduliert. In einem Beispiel betragen die Frequenzen für die Wippbewegung $f_1$ = 9 Hz, für das Drehsignal $f_2$ = 1 mHz und für den Wechselstrom $f_3$ = 37 Hz.

Der Synchronverstärker 53 ist auf die Speisefrequenz $f_3$ abgestimmt und verstärkt das Ausgangssignal des Photodetektors 6 zu einem Regelsignal für den Wechselstromgenerator 54 zur Regelung des Stromes der Heizwendel 37. Da die benötigte Regelgeschwindigkeit klein ist, erfolgt die Veränderung des Regelsignals nur in der Zeit, in der das Signal auf der Anzeigeleitung 32 in einem vorbestimmten Bereich liegt, beispielsweise wo der Analyse-Bereich 35 (Figur 2) im Gebiet mit der unveränderten Intensität $I_o$ liegt.

**Patentansprüche**

1. Spektrophotometer zum Messen von Absorptions- oder Emissionsbanden im optischen Bereich elektromagnetischer Strahlung (2), das eine Lichtquelle (1), einen von einer Steuereinrichtung (21, 22; 21, 22, 23) angesteuerten, über das Spektrum der Lichtquelle (1) mit einer Frequenez ($f_2$) verstellbaren Monochromator (5), einen Photosensor (6) zum Messen der Intensität (I) von den Monochromator (5) durchdringenden Strahlen (14) einer Wellenlänge (W) sowie eine Auswerteeinheit (19) für das Messignal des Photosensors (6) umfasst, dadurch gekennzeichnet, dass das wellenlängenbestimmende Mittel (11; 50) des Monochromators (5) zur Erzeugung einer Modulation der Wellenlänge (W) mit einer vorbestimmten Wellenlängenamplitude ($\delta$W) bei einer Frequenz ($f_1$) der am Photosensor (6) eintreffenden Strahlen (14) eingerichtet ist, dass ein Modulationsgenerator (22) zur Erzeugung der Wellenlängenamplitude ($\delta$W) und der Frequenz ($f_1$) vorhanden ist und dass die Auswerteeinheit (19) einen mit dem Modulationssignal des Modulationsgenerators (22) synchronisierbaren Verstärker aufweist, mit dem nur der Wechselstromanteil des Messignals verstärkbar ist.

2. Spektrophotometer nach Anspruch 1, dadurch gekennzeichnet, dass der Monochromator (5) ein um eine Drehachse (10) drehbares Beugungsgitter (11) enthält, dessen Gitterlinien parallel zu der Drehachse (10) ausgerichtet sind, dass die Steuereinrichtung (21, 22, 23) mit einem Antriebsmittel (16) des Beugungsgitters (11) verbunden ist und dass zum Erzeugen der Modulation der Wellenlänge (W) eine um die Drehachse (10) ausgeführte Drehbewegung des Beugungsgitters (11) mit einer Wippbewegung überlagert ist.

3. Spektrophotometer nach Anspruch 2, dadurch gekennzeichnet, dass das Beugungsgitter (11) in der Drehachse (10) seitlich überstehende Spannbändchen (42) zum drehbaren Lagern in einer Spanneinrichtung (41) aufweist, dass eine Platte (43) aus einem magnetischen Material mit dem Beugungsgitter (11) verbunden ist, dass die Spannbändchen (42) in der Spanneinrichtung (41) derart befestigt sind, dass eine einem Drehwinkel ($\Theta$) proportionale Rückwirkungskraft entsteht, und dass das Antriebsmittel (16) zum direkten Einwirken auf die Platte (43) mittels eines elektrischen oder magnetischen Feldes eingerichtet ist.

4. Spektrophotometer nach Anspruch 2 oder 3, dadurch gekennzeichnet, dass das Antriebsmittel (16) zum gleichzeitigen Erzeugen der Drehbewegung mit der überlagerten Wippbewegung eingerichtet ist.

5. Spektrophotometer nach Anspruch 3, dadurch gekennzeichnet, dass die Spanneinrichtung (41) und Spulen (46) zur Erzeugung eines auf die Platte (43) wirkenden magnetischen Feldes auf einem um die Drehachse (10) rotierbaren Teller (44) angeordnet sind, dass der Teller (44) zur Erzeugung der Drehbewegung eingerichtet ist und dass die Spulen (46) mit der Platte (43) einen direkt mit dem Modulationsgenerator (22) angesteuerten Antrieb für die Wippbewegung bilden.

6. Spektrophotometer nach Anspruch 5, dadurch gekennzeichnet, dass der Teller (44) mit konstanter Drehbewegung um die Drehachse (10) drehbar ist und dass wenigstens zwei nacheinander im Monochromator (5) wirksame Beugungsgitter (11) mit verschiedenen Gitterkonstanten auf dem Teller (44) angeordnet sind.

7. Spektrophotometer nach einem der Ansprüche 3, 5 oder 6, dadurch gekennzeichnet, dass die Spanneinrichtung (41), die Spannbändchen (42), die Platte (43) und das Beugungsgitter (11) aus einem einseitig mit einer Schicht (49) bedeckten Substrat (47) aus einem Halbleitermaterial mittels Aetzen hergestellt ist und dass die Schicht (49) aus einem solchen Material besteht, dass das Antriebsmittel (16) eine Kraft auf die Schicht (49) ausübt.

8. Spektrophotometer nach Anspruch 1, dadurch gekennzeichnet, dass der Monochromator (5) ein Fabri-Perot-Resonator (50) ist, dessen optische Länge (L) mittels eines Antriebsmittel (16) verstellbar ist, und dass zum Erzeugen der Modulation der Wellenlänge (W) das Antriebsmittel (16) mit dem Modulationsgenerator (22) der Steuereinrichtung (21, 22, 23) verbunden ist.

9. Spektrophotometer nach einem der vorstehenden Ansprüche, dadurch gekennzeichnet, dass zwischen der Lichtquelle (1) und einer Eingangsöffnung (4) des Monochromators (5) ein Probenraum (3) derart angeordnet ist, dass die Strahlung (2) zuerst den Probenraum (3) durchdringt, bevor sie zur Analyse durch die Eingangsöffnung (4) in den Monochromator (5) gelangt.

10. Spektrophotometer nach Anspruch 9, dadurch gekennzeichnet, dass im Probenraum (3) wenigstens eine Spiegelfläche (38) zum Reflektieren der Strahlung (2) vorhanden ist, bevor die Strahlung (2) in den Monochromator (5) gelangt.

11. Spektrophotometer nach Anspruch 10, dadurch gekennzeichnet, dass die Lichtquelle (1) gemeinsam mit dem Monochromator (5) in einem Gehäuse (17) angeordnet ist und so vor Schadgasen im Probenraum (3) durch ein Fenster (33) geschützt ist.

12. Spektrophotometer nach Anspruch 1, dadurch gekennzeichnet, dass ein elektronischer Teil (18) neben der Steuereinrichtung (21, 22; 21, 22, 23) und der Auswerteeinheit (19) einen Speisestrommodulator (51) umfasst, der einen Synchronverstärker (53) zum Verstärken eines Ausgangssignals des Photodetektors (6) und einen mittels des Ausgangssignals des Synchronverstärkers (53) geregelten Wechselstromgenerator (54) zum Erzeugen eines Wechselstroms mit einer Speisefrequenz ($f_3$) aufweist, dass die Lichtquelle (1) mit dem Wechselstrom gespeist ist und dass die Speisefrequenz ($f_3$) grösser als ein Vierfaches der Frequenz ($f_1$) ist.

# Fig. 1

# Fig.2

# Fig.3

# Fig.4

40

11

10

16

# Fig.5

41

43

11

46

10

42

44

45

# Fig.6

44

48

11

42

43

49

47

10

# Fig. 7

38

29

18

4

16

9

5

23

21

2

22

3

1

50

14

19

32

20

L

6

30

53

52

17

51

54

Europäisches
Patentamt

**EUROPÄISCHER RECHERCHENBERICHT**

Nummer der Anmeldung

EP    91 12 1902
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | APPLIED OPTICS. Bd. 22, Nr. 22, 15. November 1983, NEW YORK US Seiten 3618 - 3621; T.IZUMI ET AL.: 'Repetitive scanning derivative spectrometer as a monitor of environmental' * Seite 3619, linke Spalte, Zeile 25 - Seite 3620, linke Spalte, Zeile 8; Abbildung 2 * --- | 1,9-11 | G01J3/433 G01J3/06 |
| X | DE-C-3 801 187 (FRAUNHOFER-GESELLSCHAFT) * Zusammenfassung * * Spalte 2, Zeile 39 - Spalte 3, Zeile 9 * * Spalte 3, Zeile 22 - Zeile 31 * * Spalte 3, Zeile 58 - Spalte 4, Zeile 3 * * Abbildung 1 * | 1 | |
| Y | | 1-3,7,8 | |
| A | | 4 | |
| | --- | | |
| Y | GB-A-2 148 492 (STC) 30. Mai 1985 * Seite 1, Zeile 78 - Zeile 121 * * Abbildungen 1,2 * --- | 1-3,7 | |
| D,Y | GB-A-2 181 536 (PLESSEY) 23. April 1987 * Zusammenfassung * * Abbildung 1 * --- | 1,8 | RECHERCHIERTE SACHGEBIETE (Int. Cl.5 ) G01J |
| A | US-A-4 051 371 (DEWEY) 27. September 1977 * Spalte 7, Zeile 11 - Zeile 45 * * Abbildung 4 * --- | 1,12 | |
| A | US-A-3 565 567 (RAINS) 23. Februar 1971 * Zusammenfassung * * Spalte 4, Zeile 59 - Zeile 70 * * Spalte 5, Zeile 32 - Zeile 40 * * Spalte 6, Zeile 10 - Zeile 46 * * Spalte 6, Zeile 58 - Zeile 64 * * Spalte 10, Zeile 13 - Zeile 21 * * Abbildungen 1-4 * --- | 1,9 | |

-/--

Der vorliegende Recherchenbericht wurde für alle Patentansprüche erstellt

| Recherchenort | Abschlußdatum der Recherche | Prüfer |
|---|---|---|
| DEN HAAG | 05 JUNI 1992 | THOMAS R.M. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 169 418 (STC) 9. Juli 1986 <br> * Seite 4, Zeile 79 - Zeile 91 * <br> * Abbildungen 7,8 * <br><br> ----- | 1,3,5 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 05 JUNI 1992 | THOMAS R.M. |